# EUROPEAN PATENT SPECIFICATION

(11) **EP 0 817 719 B1**
(45) Date of publication and mention of the grant of the patent: **02.12.1998**
(21) Application number: 96909118.0
(22) Date of filing: 21.03.1996
(51) Int. Cl.: B29D 23/00, B29C 65/34, F16L 47/02

(54) **MANUFACTURE OF ELECTROFUSION FITTINGS**
VERFAHREN ZUR HERSTELLUNG VON ELEKTROSCHWEISSMUFFEN
FABRICATION DE DISPOSITIFS D'ACCOUPLEMENT OBTENUS PAR ELECTROFUSION

(30) Priority: 21.03.1995 GB 9505707
(43) Date of publication of application: 14.01.1998
(73) Proprietor: UPONOR LIMITED, Blackwell, Nr. Alfreton, Derbyshire DE55 5JD (GB)
(72) Inventor: WHITE, Peter, Sheffield S12 3XQ (GB)
(74) Representative: Lunt, Mark George Francis
(86) International application number: EP9601282
(87) International publication number: WO9629194

(56) References cited:
- EP-A- 0 036 963
- EP-A- 0 206 268
- EP-A- 0 221 396
- EP-A- 0 303 909
- EP-A- 0 333 379
- EP-A- 0 430 761
- DE-A- 2 053 938
- DE-A- 2 302 458
- DE-C- 2 947 583
- DE-U- 9 208 024
- FR-A- 2 606 487
- FR-A- 2 644 248
- FR-A- 2 692 020
- GB-A- 2 137 297
- GB-A- 2 232 330
- US-A- 3 778 898
- US-A- 5 210 947
- PATENT ABSTRACTS OF JAPAN vol. 014, no. 159 (M-0956), 28 March 1990 & JP,A,02 022021 (SEKISUI CHEM CO LTD), 24 January 1990,
- PATENT ABSTRACTS OF JAPAN vol. 018, no. 090 (M-1560), 15 February 1994 & JP,A,05 296383 (SEKISUI CHEM CO LTD), 9 November 1993,

## Description

This invention relates to the manufacture of electrofusion fittings, and more particularly to the production of an electrofusion fitting by over-moulding an electrical heating element.

Electrofusion fittings are well known and extensively used for joining together plastics pipes, for joining pipes to fittings, and for other applications. Such electrofusion fittings generally comprise a body of thermoplastic polymeric material having embedded therein a fusion element, for example, an electrical heating coil. The fittings are usually made by injection moulding where, for example, an electrical resistance heating coil is wound upon a mould core in a winding machine, and the core, with the coil wound thereon, is placed within a mould chamber of an injection moulding machine. Thermoplastic polymeric material is then over-moulded around the coil and the core, to form the body of a hollow electrofusion fitting. Typical electrofusion fittings and methods for their manufacture are described in GB2189737, GB2194749, US4797993, US5163713, and US5228186, the entire disclosures of which are incorporated herein by reference.

The conventional moulding method works well for small sizes of fittings, but as the size of the electrofusion fitting increases, for example, above 180mm diameter, the size and weight of the mould core becomes a handling problem for the operator of the injection moulding machine. Efforts have been made to overcome the weight problem by substituting aluminum cores for the steel cores conventionally used, but these wear out more quickly and are costly to replace.

In other proposals, for example, in order to improve the quality of the moulding, a pre-form is first made in a separate moulding operation. In one such proposal, a thin shell or pre-form of thermoplastic polymeric material is first moulded, and the heating coil wound thereover. Alternatively, the coil is wound upon a mould core, and a thin shell or pre-form of thermoplastic polymeric material injection moulded thereover. In both cases a core, carrying the pre-form with the heating coil embedded therein, is then transferred to a second, larger, injection moulding machine in order to mould the body of the fitting over the pre-form. It is apparent that this two stage moulding process adds very considerably to the costs of manufacture and exacerbates the handling problem.

It has also been proposed to manufacture a thin preform by extrusion, and to wind the coil thereover, but it is very difficult to obtain the required dimensional accuracy and thin-wall section by extrusion, and preforms made in this way also tend not to hold their shape on storage.

At present, therefore, there is no solution to the problem outlined above other than to go to full automation, which, with conventional techniques, is impractical and costly for any except perhaps the most popular sizes of fittings.

GB-A-2137297 discloses forming a preform by pressing a sheet onto a heating element while passing a current through it, the preform being inserted into an injection mould for the purpose of forming an electrofusion branch pipe fitting.

GB-A-2232330 discloses a method of producing a tubular electrofusion fitting by winding a coil of resistance heating wire on a collapsible mandrel and then winding thermoplastic material in a molten state around the mandrel so that the wire becomes embedded in the plastics material which, once solidified, can be removed from the mandrel by deflating a bladder.

DE-C-2947583 discloses expanding a portion of pipe, sliding the portion over a mandrel on which resistance heating wire has been wound, shrinking the pipe on to the mandrel, heating the wire until it penetrates the pipe and cooling the pipe length for ejection from the mandrel.

EP-A-0221396 discloses an electrofusion coupler having blind bores which become filled with expanded melted plastics material indicating that fusion has taken place. The sleeve in which the blind bore is disposed may contrast in colour to an inner plastics layer.

EP-A-0303909 discloses winding a hot wire or wire with molten plastics thereon around a pre-form, which is subsequently over moulded with an encapsulating jacket.

The present invention provides a method for the manufacture of an electrofusion fitting, in which a preformed shape-retaining structure is made by fusing a layer of thermoplastic polymeric sheet material to an electrical heating element.

In a first aspect of the invention, there is provided a method for the manufacture of an electrofusion fitting, which comprises the following steps:
(i) assembling an electrical heating element and a layer of thermoplastic polymeric sheet material on a support member;
(ii) heating the layer of thermoplastic polymeric sheet material in order to soften the material and cause it to flow in order to form a shape-retaining structure with the electrical heating element; and
(iii) moulding a body of thermoplastic polymeric material over the structure produced in (ii) to form an electrofusion fitting, characterised in that the heating element is formed by winding a coil of electrical resistance wire in the form of a helical coil on a cylindrical winding mandrel, and in that the layer of thermoplastic polymeric sheet material comprises a net or mesh or a perforated film or foil.

The invention also provides an electrofusion fitting as disclosed in claim 10 and a shape-retaining structure as disclosed in claim 14.

The mandrel may be placed in a winding machine and rotated to wind the helical coil of electrical resistance wire thereon. Alternatively, the mandrel may be fixed and the wire rotated therearound. The mandrel may be provided with means for anchoring the ends of the wound coil, which means may comprise anchor points for electrical terminals to which the ends of the wire may be connected, for example by welding, crimping, or soldering.

The mandrel can be a straight-sided cylinder, but preferably it is of a type having segments which can be collapsed inwards, in order to facilitate removal of the coil therefrom. In a preferred embodiment according to the invention the mandrel when collapsed assumes a tapered configuration, but can be expanded to form a straight-sided cylinder for winding the coil.

The mandrel is preferably made from a ceramic material, or from a ceramic-coated metal such as, for example, aluminium.

The net or mesh can have strands of plastics material of a diameter of from 1 to 5mm and a hole diameter of from 5 to 25mm. The thickness of the film, foil or sheet, if used, is preferably from 0.3 to 3mm. In both cases, the width of the layer of thermoplastic polymeric sheet material can be substantially co-extensive with the axial length of the heating element, or a sub-multiple thereof.

The layer of thermoplastic polymeric sheet material may be positioned under the electrical heating element, that is to say, between the electrical heating element and the support member, but preferably it is positioned over the electrical heating element. Several layers of the thermoplastic polymeric sheet material may be laid or wrapped over one another, or over the electrical heating element, or both, as desired. Where a net or mesh is used, it is preferably in the form of a tube, and is preferably expandable, and more preferably dimensionally-recoverable, such that it can be expanded in diameter to stretch it over the coil and any terminals present and recovered into contact therewith. The tubular net or mesh can be, for example, of substantially the same length as the heating element, or slightly greater.

The layer of thermoplastic polymeric sheet material may be heated to soften the material using any suitable heating means, for example a hot air gun, an oven, or any other suitable heating device. Preferably, however, the layer of thermoplastic polymeric sheet material is heated by passing a current through the electrical heating element for a period of time sufficient to soften the thermoplastic material adjacent the heating element and cause it to flow into contact with the electrical heating element. On cooling, the layer of thermoplastic polymeric sheet material solidifies and forms a shape-retaining structure with the electrical heating element. If required, the mandrel may be provided with cooling means, for example, it may have internal passages through which a coolant liquid can be passed.

When the layer of thermoplastic polymeric material has solidified, the shape-retaining structure comprising the sheet material and the wound coil can be removed from the mandrel by collapsing the mandrel to its tapered shape and sliding the coil thereover.

Whilst the heating coil, supported by the layer of thermoplastic polymeric sheet material, can retain both its diametrical configuration and the spacing between adjacent turns of the coil, if the thermoplastic polymeric material has sufficient flexibility, it is possible to compress the coil axially, for storage and/or transportation. The coil may be restored to its original configuration either by removing the compressive force or by applying an axially extending force thereto.

Preferably the thermoplastic polymeric sheet material comprises the same thermoplastic polymeric material as the body of the electrofusion fitting and, for example, it may comprise a polyolefin such as, for example, a polymer of ethylene, propylene, butylene or any similar olefin, or copolymers thereof. Excellent results have been obtained using polyethylene and this is the preferred thermoplastic polymeric material for the sheet material and the body of the electrofusion fitting of the present invention.

The electrofusion fitting can, for example, be produced by injection moulding, and in such a process the shape-retaining structure is placed on a mould core and inserted into the mould cavity of an injection moulding machine. The mould core is preferably also of a type which collapses diametrically inwards in order to facilitate the positioning of the shape-retaining structure comprising the coil thereover. The mould core preferably also expands to a parallel-sided cylindrical shape for the injection moulding step. Preferably the diameter of the expanded mould core is slightly greater than the diameter of the expanded winding mandrel to ensure that when the mould core is expanded a good grip is obtained on the electrical heating element, to obviate any possibility of movement of the electrical heating element during injection moulding. Pegs may be provided on the mould core to facilitate location of the shape-retaining structure thereon.

After injection moulding of the body of the electrofusion fitting over the shape-retaining structure the fitting can be ejected from the mould and removed from the core by collapsing the latter. The mould core is preferably provided with internal cooling channels through which a liquid coolant can be flowed, and is preferably made from a hard wearing material, for example a beryllium steel having good thermal transfer properties.

In a further aspect, the invention finds particular application in the manufacture of electrofusion fittings having a body of cross-linked thermoplastic polymeric material. Such fittings may be produced, for example, by a method comprising moulding a body of thermoplastic polymeric material, for example, using injection moulding, wherein the thermoplastic polymeric material comprises a cross-linking agent which is activated either by the moulding temperature, (for example, a peroxide), or by a later heat treatment, or by the use of an initiator (for example, water in a silane cross-linking reaction). Alternatively, the body of polymeric material may be irradiated, for example, by electron beam irradiation, and may comprise an additive to promote radiation cross-linking, such as, for example, triallyl cyanurate, or the like.

A problem which can arise with electrofusion fittings having a body of cross-linked material is that the cross-linked material does not fuse so easily to a plastics pipe during electrofusion, particularly if the plastics pipe is itself cross-linked. The method of the present invention provides a solution to this problem in that it is readily capable of producing an electrofusion fitting wherein the body is cross-linked, but wherein the layer of thermoplastic polymeric material of the shape-retaining structure is uncross-linked. In the assembled fitting, the layer of uncross-linked thermoplastic polymeric material of the shape-retaining structure is adjacent the electrical heating element and, in use, is also adjacent the plastics pipe to be joined.

By retaining a layer of uncross-linked, and therefore, fusible, thermoplastic polymeric material adjacent the plastics pipe to be joined, it is possible to arrange for a good quality fusion bond to be formed between the body of the electrofusion fitting and the surface of the plastics pipe.

Where the layer of thermoplastic polymeric sheet material has interstices or holes therein, for example, when it comprises a net or mesh, or a perforated film or foil, there is produced, on injection moulding, a structure in which the material of the body penetrates through the interstices or holes to the inner surface of the electrofusion fitting. Such an electrofusion fitting is a new article and is accordingly included within the scope of the invention. Where the material of the body of the electrofusion fitting is cross-linked and the layer of thermoplastic polymeric sheet material has interstices or holes therein, and is uncross-linked, there can be produced an electrofusion fitting with a high degree of dimensional stability and strength, but which can still form a strong fusion bond with the surface of the plastics pipe.

A preferred embodiment of a method according to the invention will now be described with reference to the accompanying Drawings, in which:
Figure 1 shows a winder mandrel for use in the method of the present invention, in sectional side elevation;
Figure 2 shows the winder mandrel of Figure 1 in side elevation, partly in section, with an electrical heating coil wound thereon;
Figure 3 shows the winder mandrel of Figures 1 and 2, in side elevation, partly in section, with a tube of plastic mesh positioned over the electrical heating coil;
Figure 4 shows the arrangement of Figure 3 with the winder mandrel in its collapsed configuration and the coil in the act of removal;
Figure 5 shows a mould core for use in the method of the present invention, in sectional side elevation, with the shape-retaining structure comprising the electrical heating coil positioned thereover;
Figure 6 shows the mould core of Figure 5, partly in section, with the shape-retaining structure comprising the electrical heating coil ready for overmoulding; and
Figure 7 shows the mould core of Figure 6 in its collapsed configuration and the ejection of the moulded electrofusion fitting therefrom.

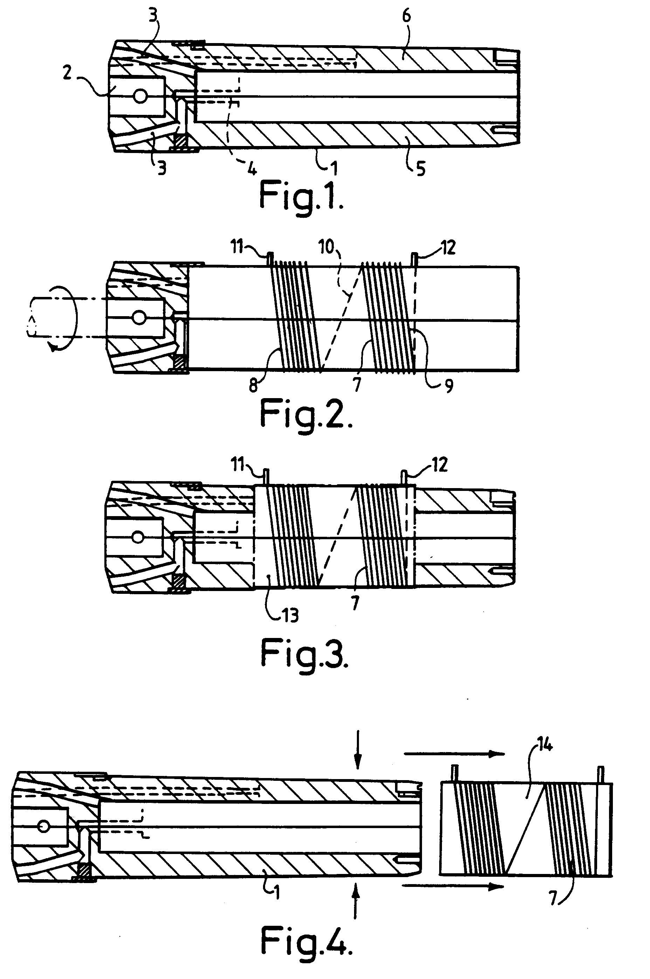

Referring now to the drawings, Figure 1 shows a collapsible winder mandrel 1 in its tapered configuration. The mandrel has a shaped recess 2 by which it can be connected to a winding machine, and channels 3 for flowing coolant into and out of central coolant passages 4. The mandrel comprises a plurality of arcuate sections of which 2, illustrated at 5 and 6, are shown. The sections are capable of slight inward and outward movement to convert the mandrel from a slightly tapered to a parallel-sided configuration.

Referring to Figure 2, the mandrel is shown in its expanded state and after a heating coil 7 has been wound thereon. The heating coil is in two sections 8 and 9, joined by a bridging wire 10. The ends of the coil are welded to electrical terminals 11 and 12 which are anchored on the winder mandrel.

After rotation of the winder mandrel to form the coil, and welding of the ends of the coil to the electrical terminals 11 and 12, a plastics mesh tube 13 is expanded in diameter by stretching, pushed over the electrical heating coil 7 and released so as to grip the coil loosely. The terminals 11 and 12 protrude through holes in the plastics mesh tube 13. The plastics mesh is formed from a fusible thermoplastic polymeric material, for example polyethylene, and when heated the fusible plastics material melts and flows around the electrical heating coil.

Heating is carried out by passing a current through the heating coil 7 sufficient to raise its temperature to about 120^{°}C for a period of around six seconds. An advantage of using the electrical heating coil to heat the fusible plastics material is that the coil can at the same time be checked for electrical resistivity and also weld quality at the terminals. This obviates the need for a subsequent quality control check after injection moulding.

After the coil and the plastics mesh have been allowed to cool, the shape-retaining structure can be removed from the winder mandrel by collapsing the sections 5 and 6 so that the shape-retaining structure 14 can be pulled off the winder mandrel 1. The shape-retaining structure still has a substantial number of mesh holes therein whose function will be later explained.

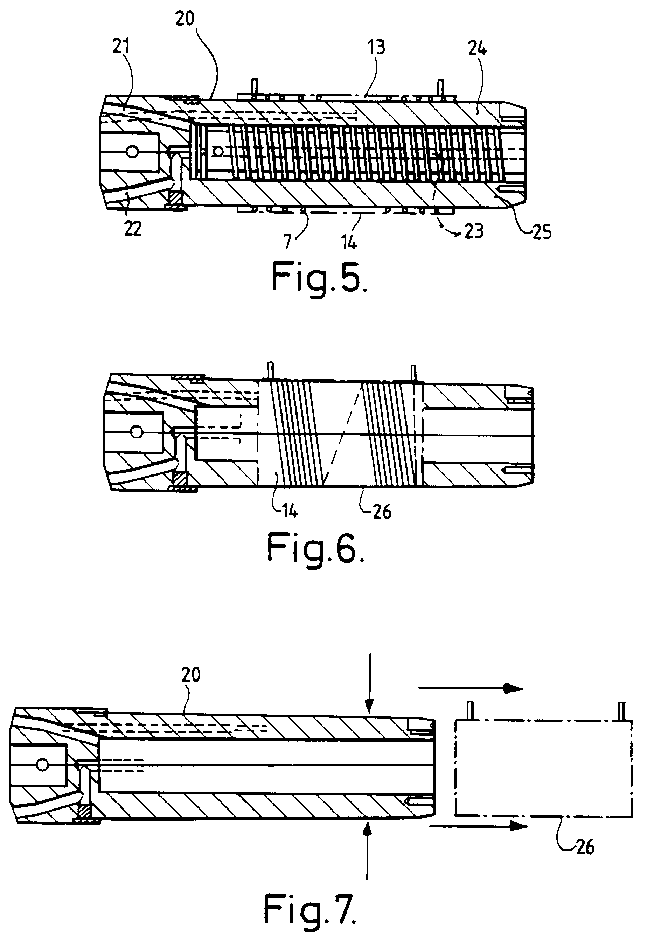

Referring now to Figure 5, there is illustrated a collapsible mould core 20 having coolant channels 21, 22 leading to a central cooling section 23. The mould has collapsible arcuate sections of which two, illustrated at 24 and 25, are shown.

Whilst the mould core, which in the present example is made of beryllium steel, is in its collapsed condition, the shape-retaining structure 14 comprising the electrical heating coil 7 and the plastics mesh 13 can be positioned thereover as illustrated. The mould core is then expanded to its parallel-sided configuration in order to grip the heating coil tightly as shown in Figure 6, and then positioned in a mould chamber of an injection moulding machine (not shown). The body of the electrofusion fitting 26 is then over-moulded around the shaped structure 14, and it will be appreciated that the injection moulding plastics material can penetrate around the turns of the coil through the interstices or holes of the plastics mesh. This produces a moulded body of low porosity and also enables fresh, unoxidised plastics material to penetrate to the surface of the mould core defining the inner surface of the electrofusion fitting. This has the advantage of producing an inner surface which is substantially unoxidised, and can assist in giving better fusion to the outer surface of a pipe to which the electrofusion fitting is to be connected.

Finally, after the moulded fitting has cooled, the mandrel 20 is again collapsed as shown in Figure 7, and the moulded electrofusion fitting 26 ejected therefrom.

Preferred embodiments of the present invention can provide a wide variety of advantages examples of which are enumerated below:
(i) The need to transport heavy mould cores is obviated.
(ii) Adjacent turns of the electrical heating coil are held in predetermined positions by the fused layer of thermoplastic polymeric sheet material. The risk of wire movement or pull during moulding is substantially reduced.
(iii) Even with larger electrofusion fittings, no lifting equipment is required.
(iv) A core puller or de-corer to remove the fitting from the mould core is no longer required. Ejection can be carried out in the mould tool because the fitting has a smooth bore.
(v) Shape-retaining structures comprising the electrical heating coil and the fused layer of thermoplastic polymeric sheet material can be made in advance of requirements and held in stock prior to moulding. Preferably any such stock should be held in a non-oxidising environment.
(vi) The method can easily be adapted to fully automatic operation.
(vii) The electrical resistivity and weld quality of the coil can be checked whilst forming the shape-retaining structure by fusion.
(viii) Coil winding can be carried out at a location remote from the injection moulding machine thus providing more efficient use of available space. No additional handling equipment is required.
(ix) Moulded parts can be ejected directly onto a conveyor system and machines run fully automated.
(x) The wire can be wound above or below the layer of thermoplastic polymeric sheet material, thereby allowing the coil to be exposed on the inner surface of the electrofusion fitting, or, if preferred, the coil can be protected, by a layer of plastics material internally, and by the body of the fitting externally, which may allow increased storage life and protection of the heating coil in hostile environments.
(xi) By using a coloured layer of thermoplastic polymeric material, and a relatively transparent body material, the colours can be used to identify particular fittings and their characteristics. In some fittings temperature indication is provided by the appearance of fused material from the interior of the fitting, and this may be more easily seen if the layer of plastics material adjacent the coil is of a different colour from the body of the fitting.
(xii) The moulding cycle is independent of the winding of the electrical heating coil, and thus the injection moulding machine need not be rendered inactive due to faults in other parts of the equipment such as the de-corer and the handling equipment. This also of course applies to the winding machine, assuming that quantities of the shape-retaining structures comprising the electrical heating coils can be made in advance.
(xiv) The method allows existing injection moulds to be utilised.
(xv) Very large electrofusion fittings can be made without the use of large, heavy and expensive cores.
(xvi) The number of machine operators can be reduced and size changeover times can be dramatically shortened.
(xvii) A composite electrofusion fitting having a cross-linked body member and an uncross-linked internal surface can readily be produced, as hereinbefore described.

The reader's attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). This invention extends to any novel one, or any novel combination, of the features disclosed in this specification (including any accompanying claims, abstract and drawings), or to any novel one, or any novel combination, of the steps of any method or process so disclosed.

## Claims

1. A method for the manufacture of an electrofusion fitting, which comprises the following steps:
(i) assembling an electrical heating element (7) and a layer of thermoplastic polymeric sheet material (13) on a support member (1);
(ii) heating the layer of thermoplastic polymeric sheet material in order to soften the material and cause it to flow in order to form a shape-retaining structure (14) with the electrical heating element; and
(iii) moulding a body of thermoplastic polymeric material over the structure produced in (ii) to form an electrofusion fitting, characterised in that the heating element is formed by winding a coil (8,9) of electrical resistance wire in the form of a helical coil on a cylindrical winding mandrel, and in that the layer of thermoplastic polymeric sheet material comprises a net or mesh or a perforated film or foil.

2. A method according to Claim 1, in which the electrofusion fitting comprises a hollow body member (26) of thermoplastic polymeric material having the electrical heating element located at or adjacent an inner surface thereof.

3. A method according to Claim 1 or 2 in which the mandrel is provided with anchor points (11,12) for electrical terminals to which the ends of the wire are connected.

4. A method according to Claim 1, 2 or 3, in which the mandrel is of a type having segments (5,6) which can be collapsed inwards, and, preferably, when collapsed the mandrel assumes a tapered configuration, but when expanded forms a parallel-sided cylinder for winding the coil thereon.

5. A method according to any of Claims 1 to 4, in which the net or mesh has strands of plastics material of a diameter of from 1 to 5mm and a hole diameter of from 5 to 25mm, the net or mesh preferably being in the form of a tube.

6. A method according to Claim 5, in which the tube is expandable such that it can be stretched over the coil and any terminals present.

7. A method according to any of the preceding claims, in which the layer of thermoplastic polymeric sheet material is positioned under the electrical heating element.

8. A method according to any of Claims 1 to 6, in which the layer of thermoplastic polymeric sheet material is positioned over the electrical heating element.

9. A method according to any of the preceding claims, in which the layer of thermoplastic polymeric sheet material is heated by passing a current through the electrical heating element for a period of time sufficient to soften the thermoplastic material adjacent the heating element and cause it to flow into contact with the heating element; and/or,
in which, when the layer of thermoplastic polymeric material has solidified, the shape-retaining structure comprising the sheet material and the wound coil is removed from the mandrel by collapsing the mandrel to a tapered shape and sliding the coil thereover; and/or
in which the thermoplastic polymeric sheet material comprises the same thermoplastic polymeric material, preferably a polyolefin, as the body of the electrical fitting; and/or,
in which the shape-retaining structure is placed on a mould core (20) and inserted into the mould cavity of an injection moulding machine, the mould core preferably being of a type which collapses diametrically inwards in order to facilitate the positioning of the shape-retaining structure comprising the coil thereover, and which can be expanded to a parallel-sided cylindrical shape for the injection moulding step; and/or
in which the body of thermoplastic polymeric material is cross-linked, the layer of thermoplastic polymeric sheet material preferably being uncross-linked; and/or
in which the material of the body of thermoplastic polymeric material penetrates through the holes in the net or mesh or perforated film or foil during moulding.

10. An electrofusion fitting (26) comprising a hollow moulded body member of thermoplastics polymeric material having an electrical heating element (7) positioned at or adjacent an inner surface thereof, characterised by the inner surface comprising a layer of thermoplastic polymeric sheet material (13) having interstices or holes therein, the material of the body member having penetrated the interstices or holes in the sheet material during moulding.

11. An electrofusion fitting according to Claim 10, wherein the hollow body member comprises a cross-linked thermoplastic polymeric material and the sheet material comprises an uncross-linked thermoplastic polymeric material.

12. An electrofusion fitting according to Claim 10 or 11, which comprises a coloured layer of thermoplastic polymeric material and a relatively transparent body material.

13. An electrofusion fitting according to Claim 10, 11 or 12, in which the colour of the layer of thermoplastic polymeric sheet material is different from that of the body member material.

14. A shape-retaining structure (14) comprising an electrofusion heating element (7) having a layer of thermoplastic polymeric material fused thereto, characterised by the layer comprising a net or mesh, or a perforated film or foil.

## Patentansprüche

1. Verfahren zur Herstellung eines Elektroschmelzgerätes, das die folgenden Massnahmen umfasst:
(i) Zusammenbau eines elektrischen Heizelementes (7) und einer Schicht aus thermoplastischem plattenförmigem Polymerisat (13) auf einem Trägerteil (1);
(ii) Beheizung der Schicht aus thermoplastischem plattenförmigem Polymerisat, um das Material weich und flüssig zu machen, um eine formbeständige Konstruktion (14) mit dem elektrischen Heizelement zu bilden; und
(iii)einen Körper aus thermoplastischem Polymerisat über die in (ii) hergestellte Konstruktion zu formen, um ein Elektroschmelzgerät herzustellen, dadurch gekennzeichnet, dass das Heizelement von einer aufgewickelten Spule (8, 9) von elektrischem Widerstandsdraht in Gestalt einer spiralförmigen Spule auf einem zylindrischen Wickeldorn gebildet wird und dass die Schicht aus thermoplastischem plattenförmigem Polymerisat ein Netz oder Geflecht oder einen perforierten Belag oder eine Folie umfasst.

2. Verfahren nach Anspruch 1, wobei das Elektroschmelzgerät einen Hohlkörper (26) aus thermoplastischem Polymerisat umfasst, bei dem sich das elektrische Heizelement an oder neben einer Innenfläche davon befindet.

3. Verfahren nach Anspruch 1 oder 2, wobei der Dorn mit Verankerungsstellen (11, 12) für elektrische Anschlüsse versehen ist, an welche die Drahtenden angeschlossen sind.

4. Verfahren nach Anspruch 1, 2 oder 3, wobei der Dorn Segmente (5, 6) hat, die nach innen geklappt werden können, und der Dorn vorzugsweise nach Zusammenklappen eine spitz zulaufende Gestalt annimmt, aber nach Ausdehnung einen parallelseitigen Zylinder zum Aufwickeln der Spule darstellt.

5. Verfahren nach einem der Ansprüche 1 bis 4, wobei das Netz oder das Geflecht Stränge aus Kunststoffmaterial mit einem Durchmesser von 1 bis 5 mm und Löcher mit einem Durchmesser von 5 bis 25 mm hat, wobei das Netz oder Geflecht vorzugsweise rohrenförmig ist.

6. Verfahren nach Anspruch 5, wobei das Rohr derart ausdehnbar ist, dass es über die Spule und eventuelle Anschlüsse gestreckt werden kann.

7. Verfahren nach einem der vorstehenden Ansprüche, wobei die Schicht aus thermoplastischem plattenförmigem Polymerisat unter dem elektrischen Heizelement liegt.

8. Verfahren nach einem der Ansprüche von 1 bis 6, wobei die Schicht aus thermoplastischem plattenförmigem Polymerisat über dem elektrischen Heizelement liegt.

9. Verfahren nach einem der vorstehenden Ansprüche, wobei die Schicht aus thermoplastischem plattenförmigem Polymerisat durch Durchleitung von Strom durch das elektrische Heizelement solange geheizt wird, bis das thermoplastische Material neben dem Heizelement erweicht und durch Fliessen Kontakt mit dem Heizelement macht; und/oder
wobei, nachdem die Schicht aus thermoplastischem plattenförmigem Polymerisat sich verfestigt hat, die formbeständige Konstruktion, die aus dem Plattenmaterial und der aufgewickelten Spule besteht, von dem Dorn durch Zusammenklappen des Dorns in eine spitz zulaufenden Gestalt und Verschieben der Spule darüber entfernt wird; und/oder
wobei das thermoplastische plattenförmige Polymerisat aus demselben thermoplastischen Polymerisat besteht, vorzugsweise ein Polyolefin, wie der Körper des elektrischen Gerätes; und/oder
wobei die formbebeständige Konstruktion auf einen Werkzeugskern (20) gelegt wird und in den Werkzeugshohlraum einer Spritzgussmaschine eingeführt wird, wobei der Werkzeugskern vorzugsweise diametral nach innen klappbar ist, um die Positionierung der formbeständigen Konstruktion mit der darüberliegenden Spule zu erleichtern, und zu einer parallelseitigen zylindrischen Form zur Spritzgussmassnahme ausdehnbar ist; und/oder
wobei der Körper aus thermoplastischem Polymerisat vernetzt ist und die Schicht aus thermoplastischem plattenförmigem Polymerisat vorzugsweise unvernetzt ist; und/oder
wobei das Material des Körpers aus thermoplastischem Polymerisat während des Formens durch die Löcher im Netz oder Geflecht oder perforiertem Belag oder Folie dringt.

10. Elektroschmelzgerät (26), das einen Hohlkörperteil aus thermoplastischem Polymerisat umfasst, das ein elektrisches Heizelement (7) an oder neben dessen Innenfläche hat, dadurch gekennzeichnet, dass die Innenfläche eine Schicht aus thermoplastischem plattenförmigem Polymerisat (13) mit Fingen oder Löchern aufweist, wobei das Material des Körperteils während des Formens durch die Fingen oder Löcher im Plattenmaterial dringt.

11. Elektroschmelzgerät nach Anspruch 10, wobei der Hohlkörperteil aus vernetztem thermoplastischem Polymerisat besteht und das Plattenmaterial aus unvernetztem thermoplastischem Polymerisat besteht.

12. Elektroschmelzgerät nach Anspruch 10 oder 11, das aus einer farbigen Schicht aus thermoplastischem Polymerisat und einem verhältnismässig durchsichtigen Körpermaterial besteht.

13. Elektroschmelzgerät nach Anspruch 10, 11 oder 12, wobei die Farbe der Schicht aus thermoplastischem plattenförmigem Polymerisat sich von der Farbe des Materials des Körperteils unterscheidet.

14. Formbeständige Konstruktion (14), die aus einem Elektroschmelz-Heizelement (7) mit einer aufgeschmolzenen Schicht aus thermoplastischem Polymerisat besteht, dadurch gekennzeichnet, dass die Schicht aus Netz oder Geflecht oder einem perforierten Belag oder Folie besteht.

## Revendications

1. Méthode pour la fabrication d'une pièce par électrofusion, qui comprend les étapes suivantes :
(i) l'assemblage d'un élément (7) chauffant électrique et d'une couche de matériau (13) en feuilles polymérique thermoplastique sur un support (1) ;
(ii) le chauffage de la couche de matériau en feuilles polymérique thermoplastique afin de ramollir le matériau et de provoquer son écoulement afin de former une structure (14) retenant une forme avec l'élément chauffant électrique ; et
(iii) le moulage d'un corps de matériau polymérique thermoplastique sur la structure produite en (ii) pour former une pièce par électrofusion, caractérisée en ce que l'élément chauffant est formé en enroulant une bobine (8,9) de fil de résistance électrique sous la forme d'une bobine hélicoïdale sur un mandrin d'enroulement cylindrique, et en ce que la couche de matériau en feuilles polymérique thermoplastique comprend un filet ou armature en mailles ou une feuille ou film perforé.

2. Méthode selon la revendication 1, dans laquelle la pièce par électrofusion comprend un corps (26) creux de matériau polymérique thermoplastique qui a l'élément chauffant électrique situé sur ou à côté d'une surface intérieure de celui-ci.

3. Méthode selon la revendication 1 ou 2 dans laquelle le mandrin est fourni avec des points (11,12) d'ancrage pour les bornes électriques auxquelles les extrémités du fil sont connectées.

4. Méthode selon la revendication 1, 2 ou 3, dans laquelle le mandrin est du type à segments (5,6) qui peuvent être rentrés vers l'intérieur, et, de préférence, quand rentrés le mandrin prend une configuration conique, mais quand ils sont sortis prend une forme de cylindre aux côtés parallèles pour enrouler la bobine sur celui-ci.

5. Méthode selon une quelconque des revendications 1 à 4, dans laquelle le filet ou l'armature en mailles a des bandes de matériau en plastique d'un diamètre allant de 1 à 5 mm et d'un diamètre de trou allant de 5 à 25 mm, le filet ou armature en mailles ayant de préférence la forme d'un tube.

6. Méthode selon la revendication 5, dans laquelle le tube est extensible de sorte qu'il peut être étendu sur la bobine et toutes les bornes présentes.

7. Méthode selon une quelconque des revendications précédentes, dans laquelle la couche de matériau en feuilles polymérique thermoplastique est positionnée sous l'élément chauffant électrique.

8. Méthode selon une quelconque des revendications 1 à 6, dans laquelle la couche de matériau en feuilles polymérique thermoplastique est positionnée sur l'élément chauffant électrique.

9. Méthode selon une quelconque des revendications précédentes, dans laquelle la couche de matériau en feuilles polymérique thermoplastique est chauffée en passant un courant à travers l'élément chauffant électrique pendant une période de temps suffisante pour ramollir le matériau thermoplastique à côté de l'élément chauffant et provoquer son écoulement au contact de l'élément chauffant ; et/ou,
dans laquelle, quand la couche de matériau polymérique thermoplastique s'est solidifiée, la structure retenant une forme comprenant le matériau en feuilles et la bobine enroulée est enlevée du mandrin en faisant rentrer les segments du mandrin pour le rendre conique et en faisant glisser la bobine sur celui-ci ; et/ou
dans laquelle le matériau en feuilles polymérique thermoplastique comprend le même matériau polymérique thermoplastique, de préférence une polyoléfine, pour le corps de la pièce électrique ; et/ou,
dans laquelle la structure retenant une forme est placée sur un noyau (20) de moule et insérée dans la cavité de moule d'une machine de moulage par injection, le noyau de moule étant de préférence du type qui se rentre vers l'intérieur diamétralement de façon à faciliter le positionnement de la structure retenant une forme comprenant la bobine sur celle-ci, et qui peut être allongé pour prendre une forme cylindrique aux côtés parallèles pour l'étape de moulage par injection ; et/ou
dans laquelle le corps de matériau polymérique thermoplastique est réticulé, la couche de matériau en feuilles polymérique thermoplastique étant de préférence non réticulée ; et/ou
dans laquelle le matériau du corps du matériau polymérique thermoplastique pénètre dans les trous du filet ou armature en mailles ou de la feuille ou film perforé durant le moulage.

10. Pièce (26) par électrofusion comprenant un corps moulé creux de matériau polymérique thermoplastique qui a un élément (7) chauffant électrique positionné sur ou à côté d'une surface intérieure de celui-ci, caractérisée en ce que la surface intérieure comprend une couche de matériau (13) en feuilles polymérique thermoplastique possédant des interstices ou des trous à l'intérieur de celui-ci, le matériau du corps ayant pénétré dans les interstices ou trous dans le matériau en feuilles durant le moulage.

11. Pièce par électrofusion selon la revendication 10, dans laquelle le corps creux comprend un matériau polymérique thermoplastique réticulé et le matériau en feuilles comprend un matériau polymérique thermoplastique non réticulé.

12. Pièce par électrofusion selon la revendication 10 ou 11, qui comprend une couche colorée de matériau polymérique thermoplastique et un matériau de corps relativement transparent.

13. Pièce par électrofusion selon la revendication 10, 11 ou 12, dans laquelle la couleur de la couche de matériau en feuilles polymérique thermoplastique est différente de celle du matériau du corps.

14. Structure (14) retenant une forme comprenant un élément (7) chauffant par électrofusion possédant une couche de matériau polymérique thermoplastique fondue sur celui-ci, caractérisée en ce que la couche comprend un filet ou armature en mailles, ou une feuille ou film perforé.
